# FASCICULE DE BREVET EUROPEEN

(11) **EP 3 704 833 B1**
(45) Date de publication et mention de la délivrance du brevet: **29.03.2023**
(21) Numéro de dépôt: 18808422.2
(22) Date de dépôt: 24.10.2018
(51) Int. Cl.: H04L 41/082, H04L 43/08, H04L 43/50, H04L 41/0681, H04L 41/0866, G06F 8/65, H04L 41/0897, H04L 41/40, G06F 9/455

(54) **PROCÉDÉ D'APPLICATION D'UN CORRECTIF SUR UNE FONCTION RÉSEAU VIRTUALISÉE À METTRE À JOUR**
VERFAHREN ZUM ANWENDEN EINES PATCHS AUF EINE ZU AKTUALISIERENDE VIRTUALISIERTE NETZWERKFUNKTION
METHOD FOR APPLYING A PATCH TO A VIRTUALISED NETWORK FUNCTION TO BE UPDATED

(30) Priorité: 31.10.2017 FR 1760280
(43) Date de publication de la demande: 09.09.2020
(73) Titulaire: Orange, 92130 Issy-les-Moulineaux (FR)
(72) Inventeur: CHAIGNON, Paul, 92326 Châtillon Cedex (FR); LAZRI, Kahina, 92326 Châtillon Cedex (FR)
(74) Mandataire: Cabinet Beau de Loménie
(86) Numéro de dépôt international: PCT/FR2018/052638
(87) Numéro de publication internationale: WO 2019/086783

(56) Documents cités:
- EP-A1- 3 182 678
- US-A1- 2016 103 698
- US-A1- 2016 132 420

## Description

La présente invention concerne le domaine de la virtualisation des réseaux, et plus particulièrement l'anticipation de défaillances lors de l'application de correctifs sur des fonctions réseau virtualisées en cours d'exécution dans un environnement virtuel de production.

Nous assistons depuis une dizaine d'années à une évolution majeure des réseaux de télécommunications. Cette évolution, qui tend vers une unification des ressources informatiques et réseau, vise principalement à rendre les ressources réseaux programmables ; elle repose sur de nouveaux paradigmes réseaux : le SDN (pour « Software Defined Networks), le NFV (pour « Network Function Virtualization ») et plus généralement, la virtualisation réseau. La virtualisation réseau permet l'exécution de multiples topologies virtuelles de réseaux, indépendantes les unes des autres, sur une même architecture physique. Elle intervient sur trois plans :
- ressources matérielles : la virtualisation réseau prévoit un partitionnement de la bande passante réseau entre de multiples utilisateurs clients auxquels des réseaux virtuels ont été alloués,
- couche de gestion : la virtualisation réseau propose une mutualisation du plan de gestion qui permet à différents utilisateurs de piloter l'acheminement des paquets réseau sur un réseau virtuel qui leur a été alloué ;
- couche virtuelle : elle correspond à l'ensemble des machines virtuelles qui exécutent des fonctions réseaux virtualisées. Une fonction réseau virtualisée, par exemple une fonction de traduction d'adresse, peut être mise en oeuvre dans cette architecture virtuelle, par une machine virtuelle ou plusieurs.

Lorsqu'une topologie virtuelle de réseau est instanciée pour un utilisateur ou un groupe d'utilisateurs, ou pour un service particulier, on parle de « slice réseau » (ou « tranche de réseau » en français). Les utilisateurs sont par exemple des fournisseurs d'infrastructures virtuelles, des entreprises, des utilisateurs finaux, etc. Ainsi, plusieurs slice réseau, indépendants les uns des autres, peuvent cohabiter et reposer sur une même infrastructure matérielle. Un utilisateur, tel une entreprise, n'a une vision que de son slice et n'accède qu'à son slice réseau. Un opérateur de l'infrastructure virtuelle qui met à disposition des réseaux virtuels garantit l'isolation des réseaux virtuels les uns vis-à-vis des autres.

L'ETSI a défini un modèle de référence, connu sous le nom de « MANO », qui décrit l'ensemble des entités permettant l'orchestration de fonctions réseaux proposées par une telle infrastructure, telles que la création, le déploiement, la migration, etc., de machines virtuelles sous-jacentes. Ce modèle introduit des composantes telles que les fonctions réseau virtualisées, ou « VNF » (pour « Virtual Network Function »), qui réalisent une fonction réseau spécifique et qui sont mises en oeuvre par une ou plusieurs machines virtuelles qui contiennent une suite logicielle et des options nécessaires à l'exécution de ces fonctions. Le modèle MANO définit également la « VIM » (pour « Virtual Infrastructure Management »), qui correspond à la couche de gestion de l'infrastructure matérielle, de la couche de virtualisation et de la couche virtuelle.

La virtualisation réseau permet ainsi une grande flexibilité dans les offres réseau. Un utilisateur tel une entreprise ou une administration, etc., dispose de son réseau comme s'il disposait d'un réseau physique classique. La virtualisation réseau permet de virtualiser l'intégralité des serveurs, routeurs, commutateurs et pare-feu de topologies réseau pour qu'ils s'exécutent tous sur une seule plate-forme matérielle, sans investissement supplémentaire dans le matériel réseau.

Dans une telle architecture virtuelle de réseau, au même titre que dans une architecture réseau classique, des mises à jour peuvent être nécessaires. Il est habituel dans ce cas d'appliquer des correctifs sur des fonctions réseau virtualisées, au même titre que sur des équipements réseau qui mettraient en oeuvre ces fonctions dans une architecture réseau classique.

L'application de correctifs repose de manière classique sur des procédures de tests. Il est habituel pour la mise en oeuvre de ces procédures de définir un jeu de tests le plus exhaustif possible, d'appliquer ce jeu de test à la fonction patchée, c'est-à-dire la fonction à mettre à jour qui intègre le correctif, puis, une fois les tests passés avec succès, de patcher, ou d'appliquer le correctif à la fonction à mettre à jour qui s'exécute dans son environnement de production. Les tests s'effectuent en général dans un environnement de test, isolé de l'environnement de production et censé reproduire l'environnement de production de la fonction à mettre à jour.

Cependant, les procédures de tests ne peuvent pas anticiper toutes les défaillances possibles d'une fonction réseau virtualisée mise à jour dans un réseau virtuel. On recense au moins trois catégories de défaillances qui ne peuvent être anticipées :
- incomplétude des jeux de tests. Cela va bien sûr au-delà d'un contexte de virtualisation réseau ;
- état antérieur de la fonction réseau virtualisée à mettre à jour ; un correctif est appliqué sur au moins une machine virtuelle de la fonction réseau virtualisée qui dispose déjà d'un état système. Cet état comprend des valeurs de registres CPU, le contenu de pages mémoire, des connexions réseau, etc. Lorsque des correctifs sont appliqués durant la phase de test sur une machine virtuelle créée pour les besoins d'un test, celle-ci dispose d'un état antérieur différent de celui de la machine virtuelle en cours d'exécution en environnement de production. A cause de ces états différents, le correctif peut produire des résultats différents et inattendus selon la fonction réseau virtualisée sur laquelle il est appliqué ;

- imprédictibilité du trafic entrant de la fonction réseau virtualisée à mettre à jour : les fonctions réseau virtualisées précédentes, c'est-à-dire celles qui sont traversées par un trafic qui est ensuite acheminé vers la fonction réseau virtualisée à mettre à jour peuvent introduire des anomalies dont il est difficile de tenir compte dans les tests.

La publication brevet US2016/132420 décrit un système pour tester dans un environnement une mise à jour d'une première machine virtuelle. Une deuxième machine virtuelle clone de la première est créée, puis mise à jour. Des tests sont alors exécutés sur la deuxième machine virtuelle.

Un des buts de l'invention est de remédier à des insuffisances/inconvénients de l'état de la technique et/ou d'y apporter des améliorations.

À cette fin l'invention propose un procédé d'application d'un correctif à une fonction réseau virtualisée pour tester la mise à jour comprise dans un premier réseau virtuel, un hyperviseur réseau s'interfaçant entre le premier réseau virtuel et un ensemble d'au moins une ressource matérielle apte à fournir des ressources nécessaires audit premier réseau virtuel, ledit procédé, mis en oeuvre par l'hyperviseur réseau, comprenant :
- identification d'un ensemble de fonctions réseau virtualisées dépendantes comprises dans le premier réseau virtuel, ledit ensemble comprenant au moins la fonction réseau virtualisée à mettre à jour et au moins une fonction réseau fonctionnellement dépendante de ladite fonction réseau à mettre à jour,
- création d'un second réseau virtuel, dit « réseau virtuel de test », ledit réseau virtuel de test comprenant des clones de machines virtuelles mettant en oeuvre les fonctions réseau virtualisées dépendantes de l'ensemble, lesdites machines virtuelles clonées formant des clones des fonctions réseau virtualisées dépendantes de l'ensemble, les machines virtuelles clonées disposant d'un état système identique à celui des machines virtuelles mettant en oeuvre les fonction réseau virtualisées dépendantes de l'ensemble dans le premier réseau,
- interconnexion dans le réseau virtuel de test des clones des fonctions réseau virtualisées dépendantes de l'ensemble, ladite interconnexion étant identique à une interconnexion dans le premier réseau des fonctions réseau virtualisées dépendantes de l'ensemble,
- identification d'au moins un paquet de données en entrée d'une fonction réseau virtualisée de l'ensemble de fonctions réseau virtualisées dépendantes, duplication dudit paquet identifié et acheminement dudit paquet dupliqué vers le réseau virtuel de test,
- application du correctif au clone de la fonction réseau virtualisée à mettre à jour dans le réseau de test,
- collecte et comparaison de valeurs d'au moins un premier et un deuxième indicateur de performance, un premier indicateur mesurant une valeur de performance sur une fonction réseau virtualisée supervisée de l'ensemble lors de l'acheminement de paquets en entrée de ladite fonction réseau virtualisée dans le premier réseau virtuel et un deuxième indicateur mesurant la valeur de performance sur le clone de la fonction réseau virtualisée correspondante lors de l'acheminement de paquets dupliqués en entrée de la fonction réseau virtualisée correspondante dans le réseau virtuel de test, une alerte étant déclenchée lorsque les valeurs des premier et deuxième indicateurs diffèrent.

Le procédé décrit ici permet d'anticiper des défaillances lors de l'application de correctifs sur des fonctions réseau virtualisées à mettre à jour et en cours d'exécution dans un environnement de production. La création du réseau virtuel de test se fait sans arrêt ni perturbation du réseau virtuel de production. En effet, la ou les machines virtuelles qui mettent en oeuvre la ou les fonctions réseau virtualisées qui sont destinées à faire partie du réseau virtuel de test sont dupliquées, ou clonées « à chaud », c'est-à-dire sans interrompre leur exécution. Ce clonage permet d'obtenir des fonctions réseau virtualisées et machines virtuelles sous-jacentes qui disposent d'un état système identique à celui des fonctions réseau virtualisées et machines virtuelles sous-jacentes qui s'exécutent dans le réseau virtuel de production. Les conditions de test ainsi créées dans le réseau virtuel de test sont donc similaires à celles du réseau de production et donc idéales pour tester la fonction réseau virtualisée à mettre à jour.

Par ailleurs, les conditions de test sont telles, qu'elles correspondent à l'environnement opérationnel associé au réseau virtuel de production. En effet, des paquets en entrée des fonctions réseau virtualisées dépendantes sont copiés et acheminés vers le réseau virtuel de test. Ainsi, il n'est pas nécessaire de prévoir un jeu de test spécifique puisque le réseau virtuel de test fonctionne en quelques sortes en parallèle du réseau virtuel de production et reçoit les mêmes paquets que ceux reçus par les fonctions réseau virtualisée dépendantes dans l'environnement de production.

La mise en place d'un réseau virtuel de test fortement corrélé au réseau de production, puisque tout paquet entrant destiné à une fonction réseau virtualisée de l'ensemble de fonctions dépendantes est dupliqué et acheminé vers les fonctions réseau virtualisées correspondantes dans le réseau virtuel de test, permet de tenir compte d'anomalies dans les paquets entrants qui seraient imputables à des fonctions réseau virtualisées précédentes, c'est-à-dire des fonctions réseau virtualisées qui sont traversées par les paquets qui sont ensuite acheminés vers la fonctions réseau virtualisée à mettre à jour ou plus généralement vers une fonction réseau virtualisée dépendante. Ainsi, le test du correctif se fait de manière optimum, sans craindre les incomplétudes du jeu de test à ce niveau-là, c'est-à-dire au niveau du contenu des paquets entrants.

Dans un exemple de réalisation, l'ensemble de fonctions réseau virtualisées dépendantes comprend également au moins une autre fonction réseau virtualisée fonctionnellement dépendante de la fonction réseau virtualisée à mettre à jour.

L'ensemble des fonctions réseau virtualisées dépendantes qui sont identifiées sont celles qui sont susceptibles d'être perturbées lors de l'application du correctif sur la fonction réseau virtualisée à mettre à jour. Elles sont en effet toutes fonctionnellement dépendantes de la fonction réseau virtualisée à mettre à jour. Elles sont donc toutes susceptibles d'être impactées par le correctif. Dans un exemple de réalisation, ces fonctions dépendantes sont identifiées par un gestionnaire du réseau de production, à partir des connaissances que celui-ci a de son réseau de production.

Dans un premier exemple de réalisation, un gestionnaire d'infrastructure virtuelle mettant à disposition d'un client auquel a été alloué le premier réseau virtuel, une interface de l'hyperviseur réseau afin que le client contrôle le premier réseau virtuel, ledit client exerçant ainsi un contrôle dit indirect du premier réseau virtuel, l'identification d'un paquet en entrée d'une fonction réseau virtualisée de l'ensemble de fonctions réseau virtualisées dépendantes, la duplication et l'acheminement dudit paquet dupliqué vers le réseau de test comprend, lorsque la fonction réseau virtualisée de l'ensemble de fonctions réseau virtualisées dépendantes et le clone de la fonction réseau virtualisée correspondante comprise dans le second réseau sont hébergées par un même serveur hôte :
l'installation d'une règle de configuration sur un équipement réseau d'acheminement du serveur hôte, ledit équipement réseau d'acheminement étant adapté pour transmettre le paquet à la fonction réseau virtualisée de l'ensemble de fonctions réseau virtualisées dépendantes, ladite règle de configuration comprenant une duplication du paquet en entrée de la fonction réseau virtualisée de l'ensemble de fonctions réseau virtualisées dépendantes, et un envoi dudit paquet dupliqué au clone de la fonction réseau virtualisée correspondante comprise dans le second réseau et hébergée par le serveur hôte.

Dans un deuxième exemple de réalisation, un gestionnaire d'infrastructure virtuelle mettant à disposition d'un client auquel a été alloué le premier réseau virtuel, une interface de l'hyperviseur réseau afin que le client contrôle le premier réseau virtuel, ledit client exerçant ainsi un contrôle dit indirect du premier réseau virtuel, l'identification d'un paquet en entrée d'une fonction réseau virtualisée de l'ensemble de fonctions réseau virtualisées dépendantes, la duplication et l'acheminement dudit paquet dupliqué vers la fonction réseau virtualisée correspondante dans le réseau de test comprend, lorsque la fonction réseau virtualisée de l'ensemble de fonctions réseau virtualisées dépendantes est hébergée par un premier serveur hôte (h1) et que le clone de la fonction réseau virtualisée correspondante comprise dans le second réseau est hébergée par un deuxième serveur hôte :
l'installation d'une première règle de configuration sur un premier équipement réseau d'acheminement du premier serveur hôte, ledit premier équipement réseau d'acheminement étant adapté pour transmettre le paquet à la fonction réseau virtualisée de l'ensemble de fonctions réseau virtualisées dépendantes, ladite règle de configuration comprenant une duplication du paquet en entrée de la fonction réseau virtualisée de l'ensemble de fonctions réseau virtualisées dépendantes, et un envoi dudit paquet dupliqué vers le deuxième serveur, une deuxième règle de configuration étant installée sur un deuxième équipement réseau d'acheminement compris dans le deuxième serveur hôte, la deuxième règle de configuration comprenant l'envoi dudit paquet au clone de la fonction réseau virtualisée correspondante comprise dans le second réseau et hébergée par le deuxième serveur hôte.

Dans un autre exemple de réalisation, l'hyperviseur réseau reçoit d'un opérateur du premier réseau virtuel une règle destinée à être installée dans un équipement réseau d'acheminement, ladite règle modifiant un identifiant du premier réseau virtuel compris dans un paquet destiné à être acheminé vers le réseau virtuel de test, en un identifiant du réseau virtuel de test, ladite règle étant installée sur l'équipement par l'hyperviseur lorsque le réseau virtuel de test est dédié aux tests de fonctions réseau virtualisées et que le premier réseau virtuel et le réseau virtuel de test appartiennent à un même client.

Selon un exemple de réalisation du procédé, un protocole de communication orienté connexion étant utilisé pour communiquer avec une fonction réseau virtualisée dépendante de l'ensemble, l'étape d'identification, de duplication et d'acheminement d'un paquet vers le réseau de test comprend, dans une phase d'établissement d'une connexion :
- réception d'un paquet de synchronisation, ledit paquet ayant été reçu par la fonction réseau virtualisée dépendante, dupliqué et destiné à être acheminé vers la fonction réseau virtualisée correspondante dans le réseau de test, ledit paquet comprenant un identifiant de connexion, et acheminement dudit paquet de synchronisation à la fonction réseau virtualisée correspondante dans le réseau de test,
- réception en provenance de la fonction réseau virtualisée correspondante d'un premier paquet d'acquittement comprenant un premier numéro de séquence, et association du premier numéro de séquence compris dans ledit paquet d'acquittement à l'identifiant de connexion, et acheminement dudit premier paquet d'acquittement,
- réception d'un deuxième paquet d'acquittement, ledit deuxième paquet d'acquittement ayant été préalablement reçu par la fonction réseau virtualisée dépendante, dupliqué et destiné à être acheminé vers la fonction réseau virtualisée correspondante dans le réseau de test, ledit paquet comprenant l'identifiant de connexion et un premier numéro d'acquittement calculé en incrémentant un deuxième numéro de séquence généré et transmis préalablement par la fonction réseau virtualisée dépendante, et remplacement dans le deuxième paquet d'acquittement dudit premier numéro d'acquittement par un deuxième numéro d'acquittement calculé en incrémentant le premier numéro de séquence, et acheminement dudit deuxième paquet d'acquittement à la fonction réseau virtualisée correspondante dans le réseau de test.

Dans cet exemple de réalisation, une fonction réseau virtualisée de gestion des connexions permet, dans le cas de protocoles de communication orientés connexion de gérer les connexions propres au protocole utilisé de façon transparente pour le client. Cette gestion est nécessaire du fait de l'acheminement des paquets entrants de l'ensemble des fonctions réseau virtualisées vers les fonctions réseau virtualisées correspondantes de l'environnement de test. La gestion des connexions est centralisée au niveau d'une fonction réseau virtualisée de gestion des connexions apte à identifier si une telle gestion est nécessaire, c'est-à-dire à identifier si le type de protocole utilisé nécessite une gestion spécifique des connexions, et à gérer l'ensemble des connexions afin que le procédé d'application du correctif s'applique sans autre modification.

L'invention concerne aussi un serveur comprenant un hyperviseur réseau s'interfaçant entre un premier réseau virtuel et un ensemble d'au moins une ressource matérielle apte à fournir des ressources nécessaires audit premier réseau virtuel, ledit hyperviseur étant adapté pour tester la mise à jour d'une fonction réseau virtualisée à mettre à jour comprise dans le premier réseau virtuel par application d'un correctif, ledit serveur comprenant :
- des premiers moyens d'identification, agencés pour identifier un ensemble de fonctions réseau virtualisées dépendantes comprises dans le premier réseau virtuel, ledit ensemble comprenant au moins la fonction réseau virtualisée à mettre à jour et au moins une fonction réseau fonctionnellement dépendante de ladite fonction réseau à mettre à jour,
- des moyens de création, agencés pour créer un second réseau virtuel, dit « réseau virtuel de test », ledit réseau virtuel de test comprenant des clones de machines virtuelles mettant en oeuvre les fonctions réseau virtualisées dépendantes de l'ensemble, lesdites machines virtuelles clonées formant des clones des fonctions réseau virtualisées dépendantes de l'ensemble, les machines virtuelles clonées disposant d'un état système identique à celui des machines virtuelles mettant en oeuvre les fonction réseau virtualisées dépendantes de l'ensemble dans le premier réseau,
- des moyens d'interconnexion, agencés pour interconnecter dans le réseau virtuel de test des clones des fonctions réseau virtualisées dépendantes de l'ensemble, l'interconnexion des clones des fonctions réseau virtualisées dépendantes de l'ensemble étant identique à une interconnexion dans le premier réseau des fonctions réseau virtualisées dépendantes de l'ensemble,
- des moyens d'identification, de duplication et d'acheminement, agencés pour identifier au moins un paquet de données en entrée d'une fonction réseau virtualisée de l'ensemble de fonctions réseau virtualisées dépendantes pour dupliquer ledit paquet et pour acheminer ledit paquet dupliqué vers le réseau virtuel de test,
- des moyens d'application, agencés pour appliquer le correctif au clone de la fonction réseau virtualisée à mettre à jour dans le réseau de test,
- des moyens de collecte et de comparaison, agencés pour collecter et comparer des valeurs d'au moins un premier et un deuxième indicateur de performance, un premier indicateur mesurant une valeur de performance sur une fonction réseau virtualisée de l'ensemble lors de l'acheminement de paquets en entrée de ladite fonction réseau virtualisée dans le premier réseau virtuel et un deuxième indicateur mesurant la valeur de performance sur le clone de la fonction réseau virtualisée correspondante lors de l'acheminement de paquets dupliqués en entrée de la fonction réseau virtualisée correspondante dans le réseau virtuel de test, une alerte étant déclenchée lorsque les valeurs des premier et deuxième indicateurs diffèrent.

L'invention porte également sur un programme d'ordinateur sur un support de données et chargeable dans la mémoire d'un serveur informatique, comprenant des instructions de code de programme destinées à commander l'exécution des étapes du procédé d'application d'un correctif à une fonction réseau virtualisée pour tester la mise à jour de la dite fonction réseau virtualisée dans un réseau virtuel tel que décrit précédemment, lorsque le programme est exécuté sur ledit serveur.

D'autres caractéristiques et avantages de la présente invention seront mieux compris de la description et des dessins annexés parmi lesquels :
- la figure 1 présente les étapes d'un procédé d'application d'un correctif à une fonction réseau virtuelle à mettre à jour, selon un exemple de réalisation ;
- les figures 2a et 2b présentent un premier et un deuxième exemple d'architecture matérielle sous-jacente et de configuration de cette architecture par un hyperviseur réseau pour la mise en oeuvre de certaines étapes du procédé d'application d'un correctif, dans le cas d'un contrôle indirect des réseaux virtuels ;
- la figure 3 présente un exemple d'architecture matérielle sous-jacente et de configuration de cette architecture par un hyperviseur réseau pour la mise en oeuvre de certaines étapes du procédé d'application d'un correctif dans le cas d'un contrôle direct des réseaux virtuels ;
- la figure 4 présente les étapes d'un procédé de gestion des connexions dans le cas de l'utilisation d'un protocole de communication orienté connexion, selon un exemple de réalisation ;
- la figure 5 est une représentation schématique d'un serveur comprenant un hyperviseur réseau agencé pour mettre en oeuvre les étapes du procédé d'application d'un correctif, selon un exemple de réalisation.

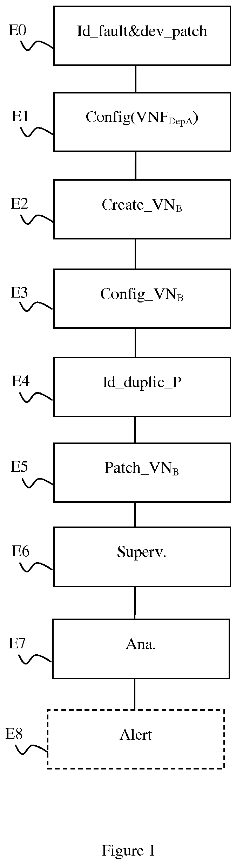

Les étapes d'un procédé d'application d'un correctif à une fonction réseau virtualisée à mettre à jour, selon un exemple de réalisation, vont maintenant être décrites en relation avec la figure 1.

On suppose que dans une phase initiale de mise à disposition d'un réseau virtuel, un gestionnaire d'infrastructure virtuelle a mis à disposition d'un client, sur demande de celui-ci, un réseau virtuel, dit réseau virtuel de production, noté VN_{A}. L'infrastructure virtuelle s'inscrit dans un contexte de virtualisation réseau et est adaptée pour proposer à différents clients des topologies de réseaux virtuels indépendantes les unes des autres, ou « slice réseau » (« tranche de réseau » en français), et qui s'exécutent au-dessus d'une même infrastructure matérielle. Le réseau virtuel VN_{A} est agencé pour héberger un ou plusieurs services, selon les besoins du client. Un service qui s'exécute dans le réseau virtuel de production VN_{A} comprend un ensemble logique de fonctions réseau virtualisées, ou « VNF » (de l'anglais « Virtual Network Function »). Chaque fonction réseau virtualisée est adaptée pour exécuter un traitement spécifique, par exemple un traitement de routage de paquets, un traitement de pare-feu, un traitement de traduction d'adresses, etc. Ces fonctions réseau virtualisées communiquent par échange de paquets afin de rendre le service attendu. Chaque fonction réseau virtualisée est mise en oeuvre par une ou plusieurs machines virtuelles, ou « VM » (de l'anglais « Virtual Machine »). Comme précisé précédemment, le réseau virtuel de production VN_{A} du client s'appuie sur un ensemble de ressources matérielles réparties sur un ou plusieurs équipements hôtes, tels que des serveurs informatiques et éventuellement des équipements réseau dédiés, tels que des routeurs, des switch, etc. A noter que les fonctions d'équipements réseau dédiés peuvent également être rendues par des modules logiciels, l'infrastructure matérielle dans ce cas est composée exclusivement de serveurs informatiques. Le client accède à son réseau virtuel VN_{A} à travers un module logiciel appelé opérateur de réseau virtuel. Un hyperviseur réseau, contrôlé par le gestionnaire de l'infrastructure, s'interface entre les ressources matérielles de l'infrastructure et l'opérateur du réseau virtuel contrôlé par le client, et entre l'opérateur du réseau virtuel et le réseau virtuel de production VN_{A} du client. L'hyperviseur réseau alloue au réseau virtuel VN_{A} du client les ressources matérielles dont il a besoin de façon transparente pour le client. Le client, via l'opérateur de réseau virtuel, n'a une vue que de son réseau virtuel VN_{A}; il n'accède pas aux ressources matérielles sous-jacentes. Selon l'hyperviseur réseau, le client peut contrôler son réseau virtuel via l'opérateur du réseau selon différentes méthodes.

Selon un premier exemple de mise en oeuvre de contrôle d'un réseau virtuel par un client, l'hyperviseur réseau, qui s'interface entre l'opérateur du réseau virtuel et le réseau virtuel VN_{A} du client, met à disposition de celui-ci une interface, ou « API » (pour « Application Programming Interface ») adaptée pour recevoir des requêtes du client et pour les appliquer aux fonctions réseau virtualisées du réseau virtuel VN_{A} du client. Cette API offre au client une vision de l'ensemble des fonctions réseau virtualisées et des machines virtuelles de son réseau virtuel VN_{A}. L'hyperviseur réseau traduit des requêtes du client en configuration pour l'infrastructure matérielle sous-jacente. Lorsque l'hyperviseur réseau met à disposition du client une telle interface pour accéder à son réseau virtuel, on dit que le client exerce un contrôle indirect de son réseau. La topologie physique est complètement cachée au client et le client ne voit de son réseau virtuel que les fonctions réseau virtualisées et les machines virtuelles. Cette approche offre une grande flexibilité à l'hyperviseur réseau dans la manière dont il garantit l'isolation entre les réseaux virtuels. La façon dont les paquets sont acheminés entre des machines virtuelles et/ou des fonctions réseau virtualisées du réseau pour satisfaire la configuration définie par le client est contrôlée par l'hyperviseur réseau et non déterminée par le client. Typiquement, l'hyperviseur réseau peut mettre en place des tunnels pour encapsuler les données entre les machines virtuelles d'un même réseau virtuel au lieu de définir des réseaux locaux virtuels (« VLAN » pour Virtual Local Area Network » en anglais). On suppose par la suite que le client exerce un contrôle indirect de son réseau virtuel VN_{A}.

Dans une étape initiale E0 d'identification d'une fonction réseau virtualisée à mettre à jour et de développement d'un correctif, ou patch, le client identifie dans son réseau virtuel de production VN_{A} une fonction réseau virtualisée à mettre à jour. On note cette fonction réseau virtualisée VNF_{A}. Par exemple, une dégradation des performances ou des dysfonctionnements ponctuels ont été observés sur la fonction réseau virtualisée VNF_{A}. On suppose que le client dispose d'un outil de supervision adapté pour détecter une telle défaillance. Dans un autre exemple de réalisation, une faille de sécurité a été publiée ; cette faille concerne la fonction réseau virtualisée sans que pour autant la faille ait été exploitée et n'ait impactée le réseau virtuel de production VN_{A}. Dans un autre exemple de réalisation, il a été décidé qu'une fonction réseau virtualisée nécessitait une légère mise à jour. On suppose également que le client a analysé le besoin inhérent à cette mise à jour et développé, ou fait développer un correctif, sous forme d'un module logiciel, censé mettre à jour la fonction réseau virtualisée. Il souhaite tester l'application de ce correctif dans un environnement de test avant de l'appliquer à la fonction réseau virtualisée VNF_{A} dans son environnement de production, c'est-à-dire dans le réseau virtuel VN_{A}. En tout état de cause, on se place ici dans un cas où l'on souhaite mettre à jour une fonction réseau virtualisée sans avoir à rebooter le système du ou des serveurs hôtes sous-jacents. La mise à jour est donc destinée à être mise en oeuvre dans le réseau virtuel de production VN_{A}, sans interrompre le fonctionnement de celui-ci.

Dans une étape E1 de fourniture d'une configuration pour le test, le client communique au gestionnaire de l'infrastructure virtuelle une liste de fonctions réseau virtualisées dépendantes qui comprend la fonction réseau virtualisée à mettre à jour VNF_{A}, ainsi qu'un ensemble de fonctions réseau virtualisées du réseau virtuel VN_{A} identifiées comme étant fonctionnellement dépendantes de la fonction réseau virtualisée VNF_{A} à mettre à jour. Cet ensemble de fonctions réseau virtualisées dépendantes qui comprend la fonction réseau virtualisée à mettre à jour VNF_{A} et le cas échéant les fonctions réseau virtualisées fonctionnellement dépendantes de la fonction réseau virtualisée à mettre à jour VNF_{A} comprend l'ensemble des fonctions réseau virtualisées qui participent au traitement d'un paquet issu de la fonction réseau virtualisée VNF_{A} à mettre à jour ; cet ensemble est noté VNF_{DePA} ; il est fourni par le client à l'hyperviseur réseau sous forme d'une liste d'identifiants des fonctions dans leur environnement de production VN_{A}.

Dans un premier exemple de réalisation, un administrateur réseau du réseau virtuel de production VN_{A} du client a une connaissance suffisante de l'architecture du réseau virtuel VN_{A} pour fournir la liste des identifiants des fonctions réseau virtualisées dépendantes VNF_{DePA} qui comprend la fonction réseau virtualisée à mettre à jour VNF_{A} et le cas échéant les fonctions réseau virtualisées qui en dépendent fonctionnellement.

Dans une étape suivante E2 de création d'un réseau virtuel de test, l'hyperviseur réseau crée un second réseau virtuel, ou slice réseau VN_{B}, dit « réseau virtuel de test », propre au client, sur la base de la configuration fournie précédemment. Ce réseau virtuel de test VN_{B} est destiné à tester le correctif à appliquer à la fonction réseau virtualisée à mettre à jour VNF_{A} dans un environnement de test similaire à une partie de l'environnement de production que constitue le réseau virtuel VN_{A}, en l'espèce au sous-réseau qui comprend l'ensemble VNF_{DepA} des fonctions réseau virtualisées dépendantes. A cette fin, l'hyperviseur réseau, plus précisément le gestionnaire de l'infrastructure virtuelle, commande le clonage, ou la duplication, de l'ensemble des machines virtuelles qui mettent en oeuvre les fonctions réseau virtualisées de la liste des fonctions réseau virtualisées dépendantes VNF_{DePA} fournie au cours de l'étape E1 précédente. A noter que dans des infrastructures de virtualisation existantes, par exemple OpenStack, des logiciels adaptés pour créer et gérer un environnement virtuel et notamment pour cloner des machines virtuelles existent ; ils ne nécessitent pas d'arrêter les machines virtuelles ; on appelle cette opération « clonage à chaud » (ou « hot cloning » en anglais). Ainsi, le fonctionnement du réseau virtuel de production VN_{A} du client n'est pas perturbé lors du clonage des machines virtuelles. Lorsqu'une machine virtuelle est clonée, ou dupliquée, la machine virtuelle obtenue, ou clone de la machine virtuelle, possède les mêmes caractéristiques que la machine virtuelle : même adresse réseau, même adresse MAC ; elle dispose des mêmes quantités de ressources, etc. Elle est cependant installée sur des pages mémoire différentes. Les machines virtuelles clonées sont donc distinctes des machines virtuelles tout en offrant des fonctionnalités identiques. Les machines virtuelles dupliquées sont rattachées au réseau virtuel de test VN_{B}. A ce stade, le réseau virtuel de test VN_{B} comprend donc l'ensemble des fonctions réseau virtualisées dépendantes VNF_{DePA} dont la liste a été fournie au cours de l'étape E1. Plus précisément, le réseau de test VN_{B} comprend l'ensemble des clones des machines virtuelles qui mettent en oeuvre les fonctions réseau virtualisées de la liste VNF_{DePA}. Dans l'environnement d'exécution que constitue le réseau de test VN_{B}, la liste des fonctions réseau virtualisées qui sont mises en oeuvre par l'ensemble de machines virtuelles clonées est notée VNF_{DePB}. Par la suite on dit aussi que les clones des fonctions réseau virtualisées VNF_{DepB} sont les fonctions réseau virtualisées correspondantes des fonctions réseau virtualisées dépendantes VNF_{DePA} dans le réseau de test VN_{B}.

Dans une étape E3 de configuration du réseau virtuel de test, l'hyperviseur réseau configure les équipements réseaux de l'infrastructure matérielle sous-jacente de manière à interconnecter l'ensemble VNF_{DepB} des clones des fonctions réseau virtualisées, comprises dans le réseau virtuel de test VN_{B}. Les clones des fonctions réseau virtualisées dépendantes de la liste VNF_{DepB} sont interconnectées dans le réseau de test VN_{B} de la même manière que le sont les fonctions réseau virtualisées dépendantes de la liste VNF_{DepA} du réseau de production VN_{A}. A noter que cette étape ne nécessite pas d'outrepasser l'isolation réseau puisque les réseaux virtuels VN_{A} et VN_{B} sont complètement disjoints à ce stade.

Dans une étape suivante E4 d'identification, de duplication et d'acheminement de paquets, l'hyperviseur réseau identifie des paquets de données entrants de l'ensemble constitué des fonctions réseau virtualisées dépendantes VNF_{DepA} du réseau virtuel VN_{A} et duplique ces paquets afin de les acheminer également en entrée de l'ensemble constitué des fonctions réseau virtualisées correspondantes VNF_{DepB} du réseau virtuel de test VN_{B}. A noter que les paquets identifiés ont été émis dans le réseau de production VN_{A} par une fonction réseau virtualisée extérieure à l'ensemble VNF_{DePA}. La duplication des paquets en entrée de l'ensemble de fonctions réseau virtualisées dépendantes VNF_{DePA} et l'acheminement des paquets dupliqués vers l'ensemble de fonctions réseau virtualisées VNF_{DepB} correspondantes dans le réseau de test VN_{B} nécessite de modifier l'hyperviseur réseau. En effet, un tel traitement outrepasse l'isolation entre les réseaux puisqu'un paquet, initialement acheminé à l'intérieur du réseau virtuel VN_{A} se trouve également être acheminé dans un autre réseau virtuel, en l'espèce le réseau virtuel de test VN_{B}.

Dans l'exemple de réalisation décrit ici, correspondant à un contrôle indirect du client sur son réseau virtuel de production VN_{A} pour lequel l'hyperviseur réseau met à disposition du client une interface d'accès API afin que celui-ci contrôle son réseau virtuel, l'hyperviseur réseau modifie l'API qu'il met à disposition du client afin que les paquets qui sont destinés à l'ensemble de fonctions réseau virtualisées dépendantes VNF_{DePA} dans le réseau virtuel de production VNF_{A} soient également acheminés vers l'ensemble des clones des fonctions réseau virtualisées VNF_{DepB} du réseau de test VN_{B}. Cette modification, bien qu'allant à l'encontre de l'isolation réseau, est sous contrôle de l'hyperviseur réseau et est destinée à mettre en place un environnement de test en parallèle de l'environnement de production dans lequel évolue la fonction réseau virtualisée défaillante VNF_{A} et ce, sans perturber le fonctionnement de celui-ci. Cette modification se traduit par la définition d'une nouvelle action de configuration, accessible par le client à partir de l'API, et destinée à commander qu'un paquet reçu par une fonction réseau virtualisée de la liste VNF_{DepA} soit dupliqué et acheminé également au clone de cette fonction réseau virtualisée, ou fonction réseau virtualisée correspondante de la liste VNF_{DepB} du réseau de test VN_{B}. Cette action, paramétrée au niveau de l'API par le client, se traduit pour l'hyperviseur réseau en une action de configuration des ressources matérielles sous-jacentes. A cette fin l'hyperviseur réseau configure un équipement réseau d'acheminement situé en amont d'une fonction réseau virtualisée de l'ensemble VNF_{DepA}, notée VNFₓ, du réseau virtuel de production VN_{A} qui reçoit un paquet entrant en provenance d'une fonction réseau virtualisée externe à l'ensemble. Plus précisément, cet équipement d'acheminement est celui qui achemine des paquets vers la fonction réseau virtualisée VNFₓ dans le réseau VN_{A} de production. L'équipement est par exemple un commutateur réseau (ou « switch » en anglais), agencé pour relier plusieurs segments dans un réseau et qui permet de créer des circuits virtuels, ou un routeur réseau, lorsqu'il s'agit d'interconnecter des réseaux. L'équipement d'acheminement peut être un équipement réseau dédié ou un équipement logiciel hébergé par un serveur hôte qui met en oeuvre des fonctions de l'équipement. A noter que la fonction réseau virtualisée VNFₓ peut recevoir des paquets de différentes provenances, ce qui peut se traduire par un acheminement mis en oeuvre par plusieurs équipements d'acheminement. Le paramétrage consiste alors à paramétrer ces multiples équipements d'acheminement afin que la fonction réseau virtualisée correspondant à VNFₓ dans le réseau de test VN_{B} reçoive l'ensemble des paquets destinés à la fonction réseau virtualisée VNFₓ du réseau de production VN_{A}. Le paramétrage consiste à dupliquer l'intégralité des paquets destinés à la fonction réseau virtualisée VNFₓ et à acheminer les paquets dupliqués vers la fonction réseau virtualisée correspondante du réseau de test VN_{B}. A cette fin, l'équipement réseau d'acheminement est paramétré de manière à permettre la duplication et l'envoi du paquet au réseau virtuel de test VN_{B}. Une fois la configuration appliquée à l'équipement réseau d'acheminement sous-jacent, tout paquet destiné à la fonction réseau virtualisée VNFₓ dans le réseau virtuel de production VN_{A} est dupliqué en un paquet dupliqué qui est acheminé vers la fonction réseau virtualisée correspondante dans le réseau virtuel de test VN_{B} ; cette fonction réseau virtualisée correspondante est notée VNF_{x'}.

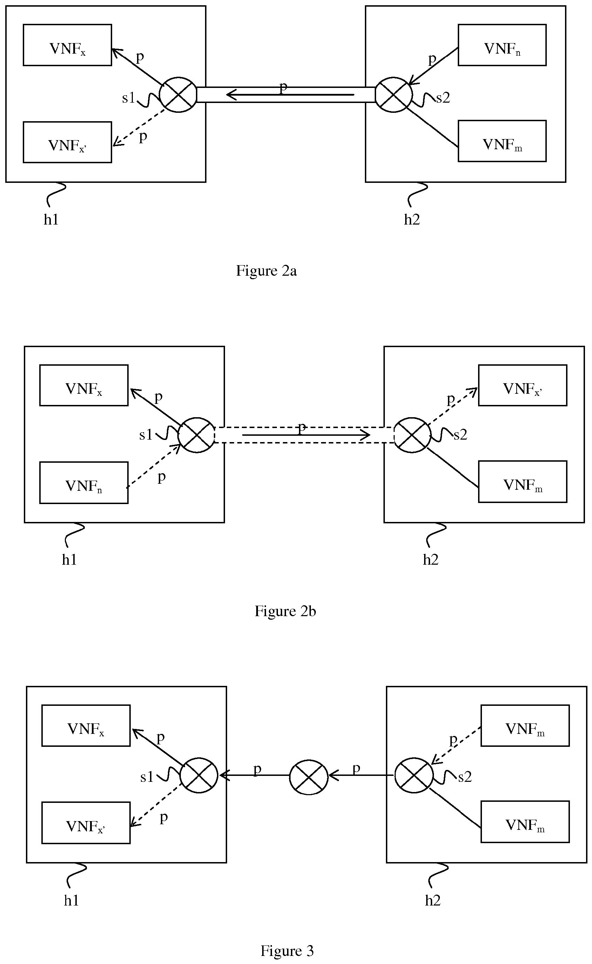

A noter que différentes configurations matérielles sous-jacentes peuvent exister. Ainsi, dans un premier exemple de configuration matérielle sous-jacente, illustré par la figure 2a, la fonction réseau virtualisée VNFₓ du réseau de production VN_{A} et la fonction réseau virtualisée correspondante dans le réseau virtuel de test VN_{B}, VNF_{x'}, sont hébergées sur le même serveur hôte h1. Plus précisément, les machines virtuelles qui mettent en oeuvre les fonctions réseau virtualisées VNFₓ et VNF_{x'} sont hébergées par le même serveur h1. Dans ce cas, afin de dupliquer et copier les paquets à destination de VNFₓ vers VNF_{x'}, l'hyperviseur réseau installe une règle sur un équipement réseau d'acheminement s1 de type commutateur situé immédiatement en amont de la fonction réseau virtualisée VNFₓ dans le réseau de production VN_{A} afin que tout paquet destiné à VNFₓ soit dupliqué et acheminé vers VNF_{x'}.

Dans un deuxième exemple de configuration, illustré par la figure 2b, la fonction réseau virtualisée VNFₓ du réseau de production VN_{A} est hébergée par un premier serveur hôte h1 et la fonction réseau virtualisée correspondante VNF_{x'} dans le réseau de test VN_{B} est hébergée par un deuxième serveur hôte h2. Dans ce cas, un tunnel (en pointillés sur la figure 2b) est établi entre les deux serveurs hôtes h1, h2, le commutateur s1 situé immédiatement en amont de la fonction réseau virtualisée VNFₓ et qui achemine des paquets vers cette fonction réseau virtualisée est configuré afin qu'un paquet destiné à la fonction VNFₓ soit dupliqué et acheminé à la fonction réseau virtualisée correspondante VNF_{x'} via le tunnel configuré à cet effet. Il peut être nécessaire de configurer un commutateur s2 du deuxième serveur hôte h2 lorsque plusieurs fonctions réseau virtualisées sont hébergées par le deuxième serveur hôte h2.

Dans une étape E5 d'application du correctif, le client du réseau virtuel de production VN_{A} qui commande le réseau virtuel VN_{A} et le réseau virtuel de test VN_{B}, commande l'application du correctif, obtenu au cours de l'étape E0 d'identification d'une fonction réseau virtualisée à mettre à jour et de développement d'un correctif, au clone de la fonction réseau virtualisée à mettre à jour VNF_{A}, notée VNF_{A}, dans le réseau de test VN_{B}. A noter que des outils permettent d'appliquer un tel correctif sans avoir besoin de redémarrer la ou les machines virtuelles sous-jacentes de la fonction réseau virtualisée VNF_{A'}, ou plus généralement du réseau de test VN_{B}. On peut citer par exemple Ksplice, solution open source pour Linux.

Dans une étape suivante E6 de supervision, le client supervise le fonctionnement des fonctions réseau virtualisées VNF_{DePA} du réseau virtuel de production VN_{A} et les fonctions réseau virtualisées correspondantes VNF_{DepB} du réseau virtuel de test VN_{B}. Des indicateurs de performance systèmes et réseaux sont ainsi collectés au niveau de l'ensemble des fonctions réseau virtualisées VNF_{DePA} et des fonctions réseau virtualisées correspondantes VNF_{DepB}. A noter que les mêmes indicateurs sont collectés au niveau du réseau virtuel de production VN_{A} et du réseau virtuel de test VN_{B}. Les indicateurs réseaux comprennent par exemple le nombre de paquets ou d'octets émis, pour une connexion donnée ou sur une période de temps donné, la durée des connexions, le nombre de paquets perdus le cas échéants. De tels indicateurs réseaux sont collectés de façon périodique et sont accessibles dans une base de données centralisée de l'infrastructure. D'autres indicateurs peuvent être collectés au niveau des fonctions réseau virtualisées, notamment au moyen de journaux systèmes (ou fichiers « logs » en anglais). Ces autres indicateurs comprennent des codes et des taux d'erreur propres à l'application mise en oeuvre par la fonction réseau virtualisée ; ils caractérisent de façon fine l'application qui est exécutée. Des indicateurs systèmes comprennent par exemple un temps ou pourcentage d'utilisation d'une CPU, d'un mémoire, d'un disque, etc. De tels indicateurs systèmes sont collectés par le gestionnaire de l'infrastructure virtuelle, par exemple OpenStack.

Dans une étape suivante E7 d'analyse, un module d'analyse de l'hyperviseur réseau procède à une comparaison et à une analyse des différents indicateurs de performance collectés d'une part au niveau de l'ensemble des fonctions réseau virtualisées VNF_{DePA} et de l'ensemble des fonctions réseau virtualisée correspondantes VNF_{DepB} du réseau virtuel de test VN2 dans lequel le correctif de sécurité a été appliqué au clone VNF_{A}, de la fonction réseau virtualisée à mettre à jour VNF_{A}. Le module d'analyse utilise des algorithmes d'analyse connus. Dans un exemple de réalisation, on utilise l'algorithme d'analyse des corrélations canoniques, plus connu sous son nom anglais « Canonical Correlation Analysis », ou « CCA ». Le but de l'analyse des corrélations canoniques est de comparer des groupes de variables deux à deux afin de déterminer s'ils décrivent un même phénomène. L'algorithme est ainsi appliqué aux valeurs des indicateurs collectés d'une part à l'ensemble des fonctions réseau virtualisées VNF_{DePA} et d'autre part à l'ensemble des fonctions réseau virtualisées correspondantes VNF_{DepB} du réseau virtuel de test VN2, plus précisément à une fonction réseau virtualisée de l'ensemble VNF_{DepA} et à son clone dans le réseau virtuel de test VN_{B}. L'analyse est ainsi adaptée pour révéler des comportements différents, en ce qui concerne les performances, entre une fonction réseau virtualisée de l'ensemble VNF_{DepA} du réseau virtuel de production VN_{A} et son clone dans le réseau virtuel de test VN_{B}.

Dans une étape E8 d'alerte, une alerte est remontée au client lorsque le comportement d'une fonction réseau virtualisée de l'ensemble de fonctions réseau virtualisées VNF_{DePA} diffère du comportement de son clone dans le réseau virtuel de test VN_{B} en ce qui concerne les performances mesurées par les indicateurs de performance. Une telle alerte, représentative d'un correctif non satisfaisant conduit le client, ou une entité en charge du test du correctif à lancer une analyse plus poussée afin de comprendre l'origine de cette alerte et d'y remédier. L'analyse peut être manuelle.

L'invention a été décrite dans le cas d'un contrôle indirect des réseaux virtuels par les clients, c'est-à-dire dans un cas où des tunnels sont établis et gérés par l'hyperviseur réseau pour acheminer des paquets entre différentes fonctions réseau virtualisées hébergées par des serveurs hôtes différents. L'invention s'applique également au cas où le client exerce un contrôle dit direct de son réseau virtuel de production VN_{A}.

Dans le cas d'un contrôle direct du client sur son réseau virtuel, l'hyperviseur permet au client d'installer des règles dans les équipements réseau d'acheminement afin que celui-ci ait un contrôle de bout en bout sur son réseau. Le client a ainsi l'impression de contrôler directement le réseau physique sous-jacent. Les paquets qui circulent à cet effet entre le contrôleur réseau du client et l'infrastructure matérielle sont interceptés de manière transparente par l'hyperviseur réseau qui modifie des paquets de contrôle afin d'assurer l'isolation entre réseaux virtuels. Ainsi, il est habituel que l'hyperviseur attribue et gère un identifiant de réseau virtuel, propre au réseau virtuel du client mais non connu de ce dernier. Lorsque le client installe une règle sur un équipement réseau d'acheminement, par exemple une règle de copie de paquets entre deux fonctions réseau virtualisées de son réseau virtuel, il est habituel que l'hyperviseur réseau intercepte la règle et ajoute un identifiant du réseau virtuel du client avant que la règle ne soit installée sur l'équipement réseau d'acheminement afin que la règle s'applique uniquement aux paquets du réseau virtuel du client.

Afin de mettre en oeuvre les étapes du procédé d'application du correctif tel que décrit précédemment dans le cas d'un contrôle direct du réseau virtuel par le client, l'hyperviseur réseau doit permettre l'installation de règles dans les équipements réseau d'acheminement de manière à ce qu'il soit possible de changer l'identifiant du réseau virtuel des paquets acheminés. En effet, selon les étapes du procédé un paquet, en l'espèce un paquet dupliqué, peut passer du réseau de production VN_{A} au réseau de test VN_{B}. Ce changement ne doit être autorisé par l'hyperviseur réseau que si le réseau de test VN_{B} est dédié aux tests et que si le réseau de production VN_{A}, dans lequel circulent les paquets destinés à être acheminés dans le réseau de test, et le réseau de test VN_{B} appartiennent au même client. Dans un exemple de réalisation, l'hyperviseur réseau laisse l'identifiant du réseau virtuel dans des réponses provenant des équipements réseau d'acheminement, afin que l'opérateur de réseau ait connaissance de cet identifiant et commande, pour les paquets comprenant cet identifiant, un acheminement vers le réseau virtuel de test. En effet, dans le cas d'un hyperviseur classique, c'est-à-dire non modifié à des fins de mise en oeuvre des étapes du procédé, il est habituel que l'hyperviseur retire cette information des réponses reçues des équipements réseau d'acheminement à des fins d'isolation réseau. Dans une variante de réalisation, et afin de ne pas révéler au client ces identifiants, l'hyperviseur traduit ces identifiants en pseudo-identifiants. Seul l'hyperviseur sait à quel identifiant de réseau virtuel correspond un pseudo-identifiant de réseau virtuel. Cette solution garantit une certaine sécurité à l'hyperviseur qui ne divulgue pas ces identifiants qualifiés de sensibles.

L'exemple de réalisation décrit précédemment s'applique particulièrement bien à des services qui reposent sur un protocole de transport qui n'est pas orienté connexion, tel que le protocole UDP (de l'anglais « User Datagram Protocol). Avec un tel protocole, deux entités communiquent de façon simple : un paquet est transmis d'un émetteur vers un destinataire, de façon unidirectionnelle, sans que le destinataire ne soit préalablement averti de la réception d'un paquet et sans que celui-ci n'accuse réception du paquet vers l'émetteur.

Dans le cas d'un protocole orienté connexion, tel que le protocole de transport TCP (pour « Transmission Control Protocol »), une session doit être établie entre deux entités qui veulent échanger des données. Ainsi, dans une demande d'établissement de connexion préalablement à un échange de données, une première entité, appelée « client », envoie à une deuxième entité, appelée « serveur », un paquet de synchronisation de type « SYN ». Le serveur envoie un acquittement sous forme d'un paquet « SYN-ACK ». Le client envoie alors un accusé de réception, sous forme d'un paquet « ACK » correspondant à un message d'acceptation. Au terme de ces échanges, le client et le serveur ont établi une session et sont prêts à communiquer. L'échange de messages entre le client et le serveur lors de l'établissement d'une session utilise un numéro de séquence généré à partir d'une valeur secrète qui peut dépendre d'une source aléatoire matérielle. La valeur secrète peut également être dérivée de la date exacte d'arrivée du paquet, auquel cas si une fonction réseau virtualisée de l'ensemble des fonctions réseau virtualisée dépendantes dans le réseau virtuel opérationnel reçoit un paquet un instant avant la fonction réseau virtualisée correspondante dans le réseau virtuel de test VN_{B} alors les deux fonctions réseau virtualisées n'ont pas la même valeur secrète. Ainsi, une session établie avec une fonction réseau virtualisée du réseau virtuel de production VN_{A}, dans le cadre de l'exécution d'un service, n'est pas établie de façon complètement similaire avec la fonction réseau virtualisée correspondante dans le réseau virtuel de test VN_{B}, du fait de cette composante aléatoire qui peut être différente. Dans ce cas, la fonction réseau virtualisée du réseau de production VN_{A} et son clone dans le réseau de test VN_{B} ne répondent pas avec le même numéro de séquence lors de l'établissement de cette connexion. La copie d'un paquet destiné à la fonction réseau virtualisée du premier réseau VN_{A} et son acheminement vers son clone dans le deuxième réseau ne permet donc pas d'établir la connexion avec le clone car le numéro de séquence généré au niveau du clone est incohérent avec le numéro de séquence utilisé par la fonction réseau virtualisée dans le premier réseau VN_{A} et donc avec la réponse attendue.

Dans cet exemple, correspondant à l'utilisation de protocoles de communication orientés connexion, il est nécessaire d'introduire une fonction réseau virtualisée de gestion des connexions, destinée à mémoriser l'état des connexions entre une fonction réseau virtualisée dans le réseau de production VN_{A} et son clone dans le réseau de test VN_{B} afin de mettre en oeuvre une copie efficace des paquets. La fonction réseau virtualisée de gestion des connexions notée VNF_{GC} est comprise de préférence dans le réseau de test VN_{B}. Elle intercepte tout paquet destiné à une fonction réseau virtualisée dépendante du réseau de production VN_{A} et qui est dupliqué par l'hyperviseur réseau puis acheminé vers le clone de la fonction réseau virtualisée dans le réseau de test VN_{B}. Elle intercepte également tout paquet réponse du clone de la fonction réseau virtualisée dans le réseau de test VN_{B} afin d'associer un identifiant de session en cours d'établissement dans le réseau de production VN_{A} à un numéro de séquence utilisé lors de l'établissement de la session dans le réseau de test VN_{B}. La fonction réseau virtualisée de gestion des connexions VNF_{GC} est agencée pour identifier le protocole de communication utilisé dans l'échange courant de paquet et pour appliquer une gestion spécifique des connexions lorsque le protocole est orienté connexion. Elle est agencée également pour laisser passer tout autre paquet sans modification dans les autres cas.

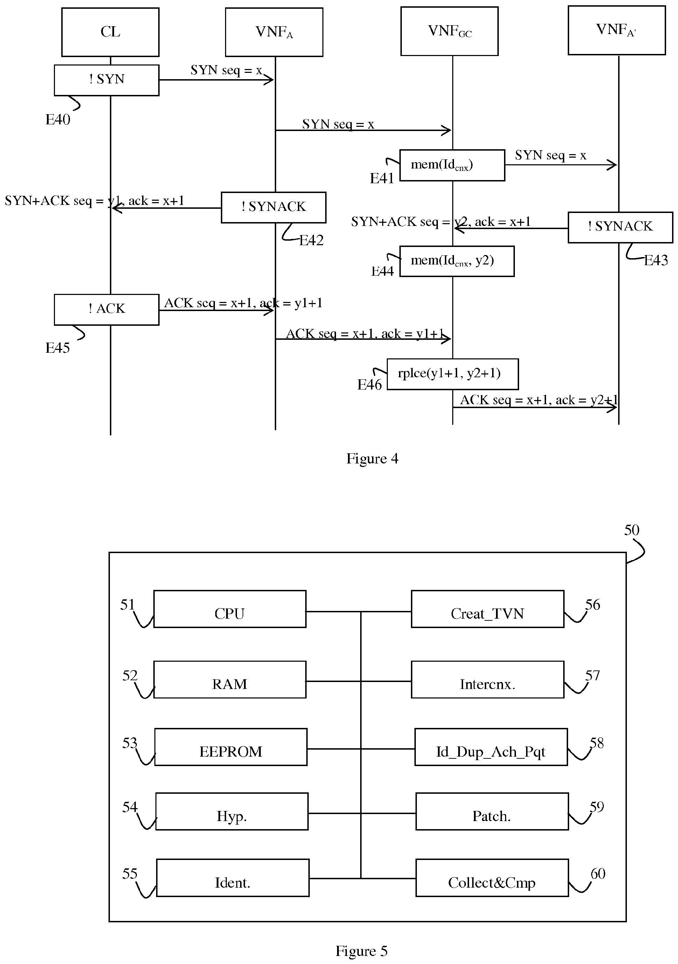

Les étapes d'un procédé de gestion de connexions par la fonction réseau de virtualisation de gestion des connexions, selon un exemple de réalisation, vont maintenant être décrites en relation avec la figure 4. Lors d'une demande de connexion destinée à une fonction réseau virtualisée dépendante du réseau de production VN_{A}, par exemple VNF_{A}, un client, par exemple une autre fonction réseau virtualisée du réseau de production VN_{A}, émet dans une étape E40 un paquet de synchronisation afin d'initier l'établissement d'une connexion avec la fonction réseau virtualisée VNF_{A} dans le réseau de production VN_{A}. Comme décrit précédemment, dans le cadre du procédé d'application d'un correctif, le paquet est dupliqué par un équipement réseau d'acheminement (non représenté sur la figure 4) et destiné à être transmis à la fonction réseau virtualisée correspondante, c'est-à-dire le clone de la fonction VNF_{A} dans le réseau de test VN_{B}, notée VNF_{A'}. La fonction réseau virtualisée de gestion des connexions VNF_{GC} intercepte ce message. Dans une étape E41 d'analyse, la fonction réseau virtualisée de gestion des connexions VNF_{GC} identifie qu'il s'agit d'un paquet de demande d'établissement d'une connexion d'un protocole orienté connexion et qu'il est nécessaire d'appliquer un traitement particulier. A cette fin, la fonction réseau virtualisée de gestion des connexions VNF_{GC} analyse l'entête du paquet. Elle mémorise un identifiant Id_{cnx} de la connexion TCP courante sous forme d'un 4-uple comprenant : une adresse IP source de la connexion, correspondant à l'adresse IP du client, une adresse IP destination de la connexion, un port source et un port destination. En fin d'étape E41 d'analyse, la fonction réseau virtualisée de gestion des connexions VNF_{GC} achemine le paquet de demande d'établissement de connexion au clone VNF_{A}, de la fonction réseau virtualisée VNF_{A} dans le réseau de test VN_{B}.

Dans une première étape de réponse E42, la fonction réseau virtualisée VNF_{A} répond à la demande d'établissement de connexion en envoyant un premier accusé de réception dans un paquet TCP SYN ACK comprenant un premier numéro de séquence y1, généré à partir d'une source aléatoire.

Dans une deuxième étape E43 de réponse, le clone VNF_{A}, de la fonction réseau virtualisée envoie en réponse un deuxième accusé de réception dans un paquet TCP SYN ACK comprenant un deuxième numéro de séquence y2 généré à partir d'une source aléatoire qui peut être différente de la source utilisée pour générer le premier numéro de séquence y1.

Dans une étape E44 de mémorisation, la fonction réseau virtualisée de gestion des connexions VNF_{GC} mémorise le deuxième numéro de séquence y2 en association avec l'identifiant de connexion Id_{cnx} obtenu au cours de l'étape E41.

Dans une troisième étape E45 de réponse, le client CL envoie à la fonction réseau virtualisée VNF_{A} un accusé de réception sous forme d'un paquet TCP ACK comprenant un numéro d'acquittement correspondant au premier numéro de séquence y1 incrémenté de 1. Comme décrit précédemment, le paquet est dupliqué et destiné à être transmis au clone VNF_{A}, de la fonction réseau virtualisée dans le réseau de test VN_{B}. La fonction réseau virtualisée de gestion des connexions VNF_{GC} intercepte ce paquet et dans une étape E46 de recherche et de remplacement, elle identifie, à partir du 4-uple compris dans le paquet, la connexion Id_{cnx} concernée et identifie le numéro de séquence y2 mémorisé en association avec l'identifiant de connexion TCP Id_{cnx} au cours de l'étape E44. Elle remplace le numéro d'acquittement y1+1 par un deuxième numéro d'acquittement égal au deuxième numéro de séquence y2 incrémenté de 1, soit y2+1. Ainsi, l'établissement d'une connexion TCP dans le réseau de production VN_{A} qui implique une fonction réseau virtualisée de l'ensemble de fonctions dépendantes VNF_{DePA} est mis en oeuvre de façon cohérente par rapport au procédé d'application du correctif dans le réseau de test VN_{B}. A cet effet, les numéros de séquence et d'acquittement sont gérés par la fonction réseau virtualisée de gestion des connexions VNF_{GC} par laquelle transite tout paquet qui est dupliqué et acheminé vers un clone d'une fonction réseau virtualisée du réseau de production impliquée dans le procédé d'application du correctif.

Un serveur apte à mettre en oeuvre les étapes du procédé d'application d'un correctif sur une fonction réseau virtualisée à mettre à jour, selon un exemple de réalisation, va maintenant être décrit en relation avec la figure 5.

Un serveur 50 apte à mettre en oeuvre les étapes du procédé d'application d'un correctif sur une fonction réseau virtualisée à mettre à jour, tel que décrit précédemment est un équipement informatique qui de manière classique comprend :
- une unité de traitement 51, ou CPU (de l'anglais « Central Processing Unit »), agencée pour exécuter des instructions de code,
- un ensemble de mémoires, dont une mémoire volatile 52 de type RAM (de l'anglais « Random Access Memory »), utilisée pour exécuter des instructions de code, stocker des variables, etc., et une mémoire de stockage 53 de type mémoire flash ou EEPROM (de l'anglais « Electronically Erasable Programmable Read Only Memory »). La mémoire de stockage 53 est agencée pour mémoriser des données et des applications. En particulier, la mémoire de stockage 53 mémorise un module logiciel d'application d'un correctif sur une fonction réseau virtualisée défaillante d'un premier réseau virtuel VN_{A} (le premier réseau virtuel n'est pas représenté sur la figure 5) agencé pour mettre en oeuvre les étapes du procédé d'application d'un correctif sur une fonction réseau virtualisée à mettre à jour décrit précédemment qui sont mises en oeuvre par l'hyperviseur réseau hébergé par le serveur 50.

Le serveur 50 est agencé pour héberger un hyperviseur réseau 54 adapté pour s'interfacer entre un premier réseau virtuel VN_{A} et un ensemble d'au moins une ressource matérielle apte à fournir des ressources nécessaires audit premier réseau virtuel. Ledit hyperviseur réseau 50 est un module logiciel comprenant les modules suivants, hébergés par le serveur 50 :
- un module d'identification 55, agencé pour identifier un ensemble de fonctions réseau virtualisées dépendantes comprises dans le premier réseau virtuel, ledit ensemble comprenant au moins la fonction réseau virtualisée à mettre à jour. Le module d'identification 55 est agencé pour mettre en oeuvre l'étape E1 du procédé d'application d'un correctif sur une fonction réseau virtualisée à mettre à jour, tel que décrit précédemment ;
- un module de création 56, agencé pour créer un second réseau virtuel VN_{B}, dit « réseau virtuel de test », ledit réseau virtuel de test comprenant des clones de machines virtuelles mettant en oeuvre les fonctions réseau virtualisées dépendantes de l'ensemble, lesdites machines virtuelles clonées formant des clones des fonctions réseau virtualisées dépendantes de l'ensemble. Le module de création 56 est agencé pour mettre en oeuvre l'étape E2 du procédé d'application d'un correctif sur une fonction réseau virtualisée à mettre à jour, tel que décrit précédemment ;
- un module d'interconnexion 57, agencé pour interconnecter dans le réseau virtuel de test des clones des fonctions réseau virtualisées dépendantes de l'ensemble, l'interconnexion des clones des fonctions réseau virtualisées dépendantes de l'ensemble étant identique à une interconnexion dans le premier réseau des fonctions réseau virtualisées dépendantes de l'ensemble. Le module d'interconnexion 57 est agencé pour mettre en oeuvre l'étape E3 du procédé d'application d'un correctif sur une fonction réseau virtualisée à mettre à jour, tel que décrit précédemment ;
- un module 58 d'identification, de duplication et d'acheminement, agencé pour identifier au moins un paquet de données en entrée d'une fonction réseau virtualisée de l'ensemble de fonctions réseau virtualisées dépendantes, pour dupliquer ledit paquet et pour acheminer ledit paquet dupliqué vers le réseau virtuel de test. A noter que le paquet provient d'une fonction réseau virtualisée qui ne fait pas partie de l'ensemble des fonctions réseau virtualisées dépendantes, c'est un paquet qui arrive en entrée des éléments comprenant les fonctions réseau virtualisées dépendantes qui constitue le sous-réseau à tester. Le module 58 d'identification, de duplication et d'acheminement est agencé pour mettre en oeuvre l'étape E4 du procédé d'application d'un correctif sur une fonction réseau virtualisée à mettre à jour, tel que décrit précédemment ;
- un module d'application 59, agencé pour appliquer un correctif au clone de la fonction réseau virtualisée à mettre à jour dans le réseau de test. Le module 59 d'application est agencé pour mettre en oeuvre l'étape E5 du procédé d'application d'un correctif sur une fonction réseau virtualisée à mettre à jour, tel que décrit précédemment ;
- un module 60 de collecte et de comparaison, agencé pour collecter et comparer des valeurs d'au moins un premier et un deuxième indicateur de performance, un premier indicateur mesurant une valeur de performance sur une fonction réseau virtualisée supervisée de l'ensemble de fonctions réseau virtualisées dépendantes du premier réseau virtuel et un deuxième indicateur mesurant la valeur de performance sur le clone de la fonction réseau virtualisée supervisée dans le réseau virtuel de test, une alerte étant déclenchée lorsque les valeurs des premier et deuxième indicateurs diffèrent. Le module 60 de collecte et de comparaison est agencé pour mettre en oeuvre les étapes E6 et E7 et l'étape optionnelle E8 du procédé d'application d'un correctif sur une fonction réseau virtualisée à mettre à jour, tel que décrit précédemment.

L'hyperviseur réseau 54, le module d'identification 55, le module de création 56, le module d'interconnexion 57, le module 58 d'identification, de duplication et d'acheminement, le module d'application 59 et le module 60 de collecte et de comparaison sont de préférence des modules logiciels comprenant des instructions logicielles pour mettre en oeuvre les étapes du procédé d'application d'un correctif sur une fonction réseau virtualisée à mettre à jour, tel que décrit précédemment, qui sont exécutées par l'hyperviseur réseau 54 hébergé par le serveur 50.

L'invention concerne donc aussi :
- un programme d'ordinateur comportant des instructions pour la mise en oeuvre du procédé d'application d'un correctif sur une fonction réseau virtualisée pour tester la mise à jour tel que décrit précédemment lorsque ce programme est exécuté par un processeur du serveur, et
- un support d'enregistrement lisible sur lequel est enregistré le programme d'ordinateur décrit ci-dessus.

## Revendications

1. Procédé d'application d'un correctif à une fonction réseau virtualisée (VNF_{A}) pour tester la mise à jour de ladite fonction réseau virtualisée comprise dans un premier réseau virtuel (VN_{A}), un hyperviseur réseau s'interfaçant entre le premier réseau virtuel et un ensemble d'au moins une ressource matérielle apte à fournir des ressources nécessaires audit premier réseau virtuel, ledit procédé, mis en oeuvre par l'hyperviseur réseau, comprenant :
- identification (E1) d'un ensemble de fonctions réseau virtualisées dépendantes comprises dans le premier réseau virtuel, ledit ensemble comprenant au moins la fonction réseau virtualisée à mettre à jour et au moins une fonction réseau fonctionnellement dépendante de ladite fonction réseau à mettre à jour,
- création (E2) d'un second réseau virtuel (VN_{B}), dit « réseau virtuel de test », ledit réseau virtuel de test comprenant des clones de machines virtuelles mettant en oeuvre les fonctions réseau virtualisées dépendantes de l'ensemble, lesdites machines virtuelles clonées formant des clones des fonctions réseau virtualisées dépendantes de l'ensemble, les machines virtuelles clonées disposant d'un état système identique à celui des machines virtuelles mettant en oeuvre les fonction réseau virtualisées dépendantes de l'ensemble dans le premier réseau,
- interconnexion (E3) dans le réseau virtuel de test des clones des fonctions réseau virtualisées dépendantes de l'ensemble, ladite interconnexion étant identique à une interconnexion dans le premier réseau des fonctions réseau virtualisées dépendantes de l'ensemble,
- identification (E4) d'au moins un paquet de données en entrée d'une fonction réseau virtualisée de l'ensemble de fonctions réseau virtualisées dépendantes, duplication dudit paquet identifié et acheminement dudit paquet dupliqué vers le réseau virtuel de test,
- application (E5) du correctif au clone de la fonction réseau virtualisée à mettre à jour dans le réseau de test,
- collecte et comparaison (E6, E7) de valeurs d'au moins un premier et un deuxième indicateur de performance, un premier indicateur mesurant une valeur de performance sur une fonction réseau virtualisée de l'ensemble lors de l'acheminement de paquets en entrée de ladite fonction réseau virtualisée dans le premier réseau virtuel et un deuxième indicateur mesurant la valeur de performance sur le clone de la fonction réseau virtualisée correspondante lors de l'acheminement de paquets dupliqués en entrée de la fonction réseau virtualisée correspondante dans le réseau virtuel de test, une alerte étant déclenchée lorsque les valeurs des premier et deuxième indicateurs diffèrent.

2. Procédé selon la revendication 1, dans lequel un gestionnaire d'infrastructure virtuelle mettant à disposition d'un client auquel a été alloué le premier réseau virtuel, une interface de l'hyperviseur réseau afin que le client contrôle le premier réseau virtuel, ledit client exerçant ainsi un contrôle dit indirect du premier réseau virtuel, l'identification d'un paquet en entrée d'une fonction réseau virtualisée de l'ensemble de fonctions réseau virtualisées dépendantes, la duplication et l'acheminement dudit paquet dupliqué vers le réseau de test comprend, lorsque la fonction réseau virtualisée de l'ensemble de fonctions réseau virtualisées dépendantes et le clone de la fonction réseau virtualisée correspondante comprise dans le second réseau sont hébergées par un même serveur hôte (h1) :
l'installation d'une règle de configuration sur un équipement réseau d'acheminement du serveur hôte, ledit équipement réseau d'acheminement étant adapté pour transmettre le paquet à la fonction réseau virtualisée de l'ensemble de fonctions réseau virtualisées dépendantes, ladite règle de configuration comprenant une duplication du paquet en entrée de la fonction réseau virtualisée de l'ensemble de fonctions réseau virtualisées dépendantes, et un envoi dudit paquet dupliqué au clone de la fonction réseau virtualisée correspondante comprise dans le second réseau et hébergée par le serveur hôte.

3. Procédé selon la revendication 1, dans lequel un gestionnaire d'infrastructure virtuelle mettant à disposition d'un client auquel a été alloué le premier réseau virtuel, une interface de l'hyperviseur réseau afin que le client contrôle le premier réseau virtuel, ledit client exerçant ainsi un contrôle dit indirect du premier réseau virtuel, l'identification d'un paquet en entrée d'une fonction réseau virtualisée de l'ensemble de fonctions réseau virtualisées dépendantes, la duplication et l'acheminement dudit paquet dupliqué vers la fonction réseau virtualisée correspondante dans le réseau de test comprend, lorsque la fonction réseau virtualisée de l'ensemble de fonctions réseau virtualisées dépendantes est hébergée par un premier serveur hôte (h1) et que le clone de la fonction réseau virtualisée correspondante comprise dans le second réseau est hébergée par un deuxième serveur hôte (h2) :
l'installation d'une première règle de configuration sur un premier équipement réseau d'acheminement (s1) du premier serveur hôte, ledit premier équipement réseau d'acheminement étant adapté pour transmettre le paquet à la fonction réseau virtualisée de l'ensemble de fonctions réseau virtualisées dépendantes, ladite règle de configuration comprenant une duplication du paquet en entrée de la fonction réseau virtualisée de l'ensemble de fonctions réseau virtualisées dépendantes, et un envoi dudit paquet dupliqué vers le deuxième serveur, une deuxième règle de configuration étant installée sur un deuxième équipement réseau d'acheminement (s2) compris dans le deuxième serveur hôte, la deuxième règle de configuration comprenant l'envoi dudit paquet au clone de la fonction réseau virtualisée correspondante comprise dans le second réseau et hébergée par le deuxième serveur hôte.

4. Procédé selon la revendication 1, dans lequel l'hyperviseur réseau reçoit d'un opérateur du premier réseau virtuel une règle destinée à être installée dans un équipement réseau d'acheminement, ladite règle modifiant un identifiant du premier réseau virtuel compris dans un paquet destiné à être acheminé vers le réseau virtuel de test, en un identifiant du réseau virtuel de test, ladite règle étant installée sur l'équipement par l'hyperviseur lorsque le réseau virtuel de test est dédié aux tests de fonctions réseau virtualisées et que le premier réseau virtuel et le réseau virtuel de test appartiennent à un même client.

5. Procédé selon l'une des revendications précédentes, dans lequel un protocole de communication orienté connexion étant utilisé pour communiquer avec une fonction réseau virtualisée dépendante de l'ensemble, l'étape d'identification, de duplication et d'acheminement d'un paquet vers le réseau de test comprend, dans une phase d'établissement d'une connexion :
- réception (E41) d'un paquet de synchronisation, ledit paquet ayant été reçu par la fonction réseau virtualisée dépendante, dupliqué et destiné à être acheminé vers la fonction réseau virtualisée correspondante dans le réseau de test, ledit paquet comprenant un identifiant de connexion (Id_{cnx}), et acheminement dudit paquet de synchronisation à la fonction réseau virtualisée correspondante dans le réseau de test,
- réception (E44) en provenance de la fonction réseau virtualisée correspondante d'un premier paquet d'acquittement comprenant un premier numéro de séquence (y2), et association du premier numéro de séquence (y2) compris dans ledit paquet d'acquittement à l'identifiant de connexion (Id_{cnx}), et acheminement dudit premier paquet d'acquittement,
- réception (E46) d'un deuxième paquet d'acquittement, ledit deuxième paquet d'acquittement ayant été préalablement reçu par la fonction réseau virtualisée dépendante, dupliqué et destiné à être acheminé vers la fonction réseau virtualisée correspondante dans le réseau de test, ledit paquet comprenant l'identifiant de connexion (Id_{cnx}) et un premier numéro d'acquittement (y 1 + 1) calculé en incrémentant un deuxième numéro de séquence généré et transmis préalablement par la fonction réseau virtualisée dépendante, et remplacement dans le deuxième paquet d'acquittement dudit premier numéro d'acquittement (y 1 + 1) par un deuxième numéro d'acquittement calculé en incrémentant le premier numéro de séquence (y2+1), et acheminement dudit deuxième paquet d'acquittement à la fonction réseau virtualisée correspondante dans le réseau de test.

6. Serveur (50) comprenant un hyperviseur réseau s'interfaçant entre un premier réseau virtuel et un ensemble d'au moins une ressource matérielle apte à fournir des ressources nécessaires audit premier réseau virtuel, ledit hyperviseur étant adapté pour tester la mise à jour d'une fonction réseau virtualisée à mettre à jour (VNF_{A}) comprise dans le premier réseau virtuel (VN_{A}) par application d'un correctif, ledit serveur comprenant :
- des premiers moyens d'identification, agencés pour identifier un ensemble de fonctions réseau virtualisées dépendantes comprises dans le premier réseau virtuel, ledit ensemble comprenant au moins la fonction réseau virtualisée à mettre à jour et au moins une fonction réseau fonctionnellement dépendante de ladite fonction réseau à mettre à jour,
- des moyens de création, agencés pour créer un second réseau virtuel (VN_{B}), dit « réseau virtuel de test », ledit réseau virtuel de test comprenant des clones de machines virtuelles mettant en oeuvre les fonctions réseau virtualisées dépendantes de l'ensemble, lesdites machines virtuelles clonées formant des clones des fonctions réseau virtualisées dépendantes de l'ensemble, les machines virtuelles clonées disposant d'un état système identique à celui des machines virtuelles mettant en oeuvre les fonction réseau virtualisées dépendantes de l'ensemble dans le premier réseau,
- des moyens d'interconnexion, agencés pour interconnecter dans le réseau virtuel de test des clones des fonctions réseau virtualisées dépendantes de l'ensemble, l'interconnexion des clones des fonctions réseau virtualisées dépendantes de l'ensemble étant identique à une interconnexion dans le premier réseau des fonctions réseau virtualisées dépendantes de l'ensemble,
- des moyens d'identification, de duplication et d'acheminement, agencés pour identifier au moins un paquet de données en entrée d'une fonction réseau virtualisée de l'ensemble de fonctions réseau virtualisées dépendantes, pour dupliquer ledit paquet identifié et pour acheminer ledit paquet dupliqué vers le réseau virtuel de test,
- des moyens d'application, agencés pour appliquer le correctif au clone de la fonction réseau virtualisée à mettre à jour dans le réseau de test,
- des moyens de collecte et de comparaison, agencés pour collecter et comparer des valeurs d'au moins un premier et un deuxième indicateur de performance, un premier indicateur mesurant une valeur de performance sur une fonction réseau virtualisée de l'ensemble lors de l'acheminement de paquets en entrée de ladite fonction réseau virtualisée dans premier réseau virtuel et un deuxième indicateur mesurant la valeur de performance sur le clone de la fonction réseau virtualisée correspondante lors de l'acheminement de paquets dupliqués en entrée de la fonction virtualisée correspondante dans le réseau virtuel de test, une alerte étant déclenchée lorsque les valeurs des premier et deuxième indicateurs diffèrent.

7. Programme d'ordinateur sur un support de données et chargeable dans la mémoire d'un serveur informatique, comprenant des instructions de code de programme destinées à commander l'exécution des étapes du procédé d'application d'un correctif à une fonction réseau virtualisée pour tester la mise à jour de ladite fonction réseau virtualisée dans un réseau virtuel, selon l'une des revendications 1 à 5, lorsque le programme est exécuté sur ledit serveur.

## Patentansprüche

1. Verfahren zur Anwendung eines Patchs auf eine virtualisierte Netzwerkfunktion (VNF_{A}), um die Aktualisierung der in einem ersten virtuellen Netzwerk (VN_{A}) enthaltenen virtualisierten Netzwerkfunktion zu testen, wobei ein Netzwerk-Hypervisor sich über eine Schnittstelle zwischen dem ersten virtuellen Netzwerk und einer Einheit von mindestens einer Hardware-Ressource verbindet, die fähig ist, notwendige Ressourcen an das erste virtuelle Netzwerk zu liefern, wobei das vom Netzwerk-Hypervisor durchgeführte Verfahren enthält:
- Identifizierung (E1) einer Einheit von im ersten virtuellen Netzwerk enthaltenen abhängigen virtualisierten Netzwerkfunktionen, wobei die Einheit mindestens die zu aktualisierende virtualisierte Netzwerkfunktion und mindestens eine funktional von der zu aktualisierenden Netzwerkfunktion abhängende Netzwerkfunktion enthält,
- Erzeugung (E2) eines zweiten virtuellen Netzwerks (VN_{B}), "virtuelles Testnetzwerk" genannt, wobei das virtuelle Testnetzwerk Klone von virtuellen Maschinen enthält, die die abhängigen virtualisierten Netzwerkfunktionen der Einheit durchführen, wobei die geklonten virtuellen Maschinen Klone der abhängigen virtualisierten Netzwerkfunktionen der Einheit bilden, wobei die geklonten virtuellen Maschinen über einen Systemzustand gleich dem der virtuellen Maschinen verfügen, die die abhängigen virtualisierten Netzwerkfunktionen der Einheit im ersten Netzwerk durchführen,
- Zusammenschaltung (E3) der Klone der abhängigen virtualisierten Netzwerkfunktionen der Einheit im virtuellen Testnetzwerk, wobei die Zusammenschaltung gleich einer Zusammenschaltung der abhängigen virtualisierten Netzwerkfunktionen der Einheit im ersten Netzwerk ist,
- Identifizierung (E4) mindestens eines Datenpakets am Eingang einer virtualisierten Netzwerkfunktion der Einheit von abhängigen virtualisierten Netzwerkfunktionen, Duplizierung des identifizierten Pakets und Weiterleitung des duplizierten Pakets an das virtuelle Testnetzwerk,
- Anwendung (E5) des Patchs auf den Klon der zu aktualisierenden virtualisierten Netzwerkfunktion im Testnetzwerk,
- Sammeln und Vergleich (E6, E7) von Werten mindestens eines ersten und eines zweiten Leistungsindikators, wobei ein erster Indikator einen Leistungswert an einer virtualisierten Netzwerkfunktion der Einheit bei der Weiterleitung von Paketen am Eingang der virtualisierten Netzwerkfunktion im ersten virtuellen Netzwerk misst, und ein zweiter Indikator den Leistungswert am Klon der entsprechenden virtualisierten Netzwerkfunktion bei der Weiterleitung von duplizierten Paketen am Eingang der entsprechenden virtualisierten Netzwerkfunktion im virtuellen Testnetzwerk misst, wobei ein Alarm ausgelöst wird, wenn die Werte der ersten und zweiten Indikatoren sich unterscheiden.

2. Verfahren nach Anspruch 1, wobei, wenn ein Manager einer virtuellen Infrastruktur einem Kunden, dem das erste virtuelle Netzwerk zugewiesen wurde, eine Schnittstelle des Netzwerk-Hypervisors zur Verfügung stellt, damit der Kunde das erste virtuelle Netzwerk kontrolliert, wobei der Kunde so eine so genannte indirekte Kontrolle des ersten virtuellen Netzwerks ausübt, die Identifizierung eines Pakets am Eingang einer virtualisierten Netzwerkfunktion der Einheit von abhängigen virtualisierten Netzwerkfunktionen, die Duplizierung und die Weiterleitung des duplizierten Pakets zum Testnetzwerk, wenn die virtualisierte Netzwerkfunktion der Einheit von abhängigen virtualisierten Netzwerkfunktionen und der Klon der im zweiten Netzwerk enthaltenen entsprechenden virtualisierten Netzwerkfunktion von einem gleichen Host-Server (h1) gehostet werden, enthält:
die Installierung einer Konfigurationsregel auf einer Weiterleitungs-Netzwerkausrüstung des Host-Servers, wobei die Weiterleitungs-Netzwerkausrüstung geeignet ist, das Paket an die virtualisierte Netzwerkfunktion der Einheit von abhängigen virtualisierten Netzwerkfunktionen zu übertragen, wobei die Konfigurationsregel eine Duplizierung des Pakets am Eingang der virtualisierten Netzwerkfunktion der Einheit von abhängigen virtualisierten Netzwerkfunktionen und ein Senden des duplizierten Pakets an den Klon der im zweiten Netzwerk enthaltenen und vom Host-Server gehosteten entsprechenden virtualisierten Netzwerkfunktion enthält.

3. Verfahren nach Anspruch 1, wobei, wenn ein Manager einer virtuellen Infrastruktur einem Kunden, dem das erste virtuelle Netzwerk zugewiesen wurde, eine Schnittstelle des Netzwerk-Hypervisors zur Verfügung stellt, damit der Kunde das erste virtuelle Netzwerk kontrolliert, wobei der Kunde so eine so genannte indirekte Kontrolle des ersten virtuellen Netzwerks ausübt, die Identifizierung eines Pakets am Eingang einer virtualisierten Netzwerkfunktion der Einheit von abhängigen virtualisierten Netzwerkfunktionen, die Duplizierung und die Weiterleitung des duplizierten Pakets zur entsprechenden Netzwerkfunktion im Testnetzwerk, wenn die virtualisierte Netzwerkfunktion der Einheit von abhängigen virtualisierten Netzwerkfunktionen von einem ersten Host-Server (h1) gehostet wird und der Klon der im zweiten Netzwerk enthaltenen entsprechenden virtualisierten Netzwerkfunktion von einem zweiten Host-Server (h2) gehostet wird, enthält:
die Installierung einer ersten Konfigurationsregel auf einer ersten Weiterleitungs-Netzwerkausrüstung (s1) des ersten Host-Servers, wobei die erste Weiterleitungs-Netzwerkausrüstung geeignet ist, das Paket an die virtualisierte Netzwerkfunktion der Einheit von abhängigen virtualisierten Netzwerkfunktionen zu übertragen, wobei die Konfigurationsregel eine Duplizierung des Pakets am Eingang der virtualisierten Netzwerkfunktion der Einheit von abhängigen virtualisierten Netzwerkfunktionen und ein Senden des duplizierten Pakets an den zweiten Server enthält, wobei eine zweite Konfigurationsregel auf einer im zweiten Host-Server enthaltenen zweiten Weiterleitungs-Netzwerkausrüstung (s2) installiert wird, wobei die zweite Konfigurationsregel das Senden des Pakets an den Klon der entsprechenden virtualisierten Netzwerkfunktion enthält, die im zweiten Netzwerk enthalten ist und vom zweiten Host-Server gehostet wird.

4. Verfahren nach Anspruch 1, wobei der Netzwerk-Hypervisor von einem Betreiber des ersten virtuellen Netzwerks eine Regel empfängt, die dazu bestimmt ist, in einer Weiterleitungs-Netzwerkausrüstung installiert zu werden, wobei die Regel eine Kennung des ersten virtuellen Netzwerks, die in einem Paket enthalten ist, das dazu bestimmt ist, zum virtuellen Testnetzwerk weitergeleitet zu werden, in eine Kennung des virtuellen Testnetzwerks ändert, wobei die Regel in der Ausrüstung vom Hypervisor installiert wird, wenn das virtuelle Testnetzwerk den Tests virtualisierter Netzwerkfunktionen dediziert ist und das erste virtuelle Netzwerk und das virtuelle Testnetzwerk dem gleichen Kunden gehören.

5. Verfahren nach einem der vorhergehenden Ansprüche, wobei, wenn ein verbindungsorientiertes Kommunikationsprotokoll verwendet wird, um mit einer abhängigen virtualisierten Netzwerkfunktion der Einheit zu kommunizieren, der Schritt der Identifizierung, der Duplizierung und der Weiterleitung eines Pakets zum Testnetzwerk in einer Aufbauphase einer Verbindung enthält:
- Empfang (E41) eines Synchronisationspakets, wobei das Paket von der abhängigen virtualisierten Netzwerkfunktion empfangen, dupliziert und dazu bestimmt wurde, zur entsprechenden virtualisierten Netzwerkfunktion im Testnetzwerk weitergeleitet zu werden, wobei das Paket eine Verbindungskennung (Id_{cnx}) enthält, und Weiterleitung des Synchronisationspakets zur entsprechenden virtualisierten Netzwerkfunktion im Testnetzwerk,
- Empfang (E44) von der entsprechenden virtualisierten Netzwerkfunktion kommend eines ersten Quittierungspakets, das eine erste Folgenummer (y2) enthält, und Zuordnung der im Quittierungspaket enthaltenen ersten Folgenummer (y2) zur Verbindungskennung (Id_{cnx}), und Weiterleitung des Quittierungspakets,
- Empfang (E46) eines zweiten Quittierungspakets, wobei das zweite Quittierungspaket vorher von der abhängigen virtualisierten Netzwerkfunktion empfangen, dupliziert und dazu bestimmt wurde, zur entsprechenden virtualisierten Netzwerkfunktion im Testnetzwerk weitergeleitet zu werden, wobei das Paket die Verbindungskennung (Id_{cnx}) und eine erste Quittierungsnummer (y1+1) enthält, die durch Inkrementieren einer vorher generierten und von der abhängigen virtualisierten Netzwerkfunktion übertragenen zweiten Folgenummer berechnet wird, und Ersetzen in dem zweiten Quittierungspaket der ersten Quittierungsnummer (y1+1) durch eine zweite Quittierungsnummer, die durch Inkrementieren der ersten Folgenummer (y2+1) berechnet wurde, und Weiterleiten des zweiten Quittierungspakets an die entsprechende virtualisierte Netzwerkfunktion im Testnetzwerk.

6. Server (50), der einen Netzwerk-Hypervisor enthält, der sich über eine Schnittstelle zwischen einem ersten virtuellen Netzwerk und einer Einheit von mindestens einer Hardware-Ressource verbindet, die fähig ist, an das erste virtuelle Netzwerk notwendige Ressourcen zu liefern, wobei der Hypervisor geeignet ist, die Aktualisierung einer in dem ersten virtuellen Netzwerk (VN_{A}) enthaltenen zu aktualisierenden virtualisierten Netzwerkfunktion (VNF_{A}) durch Anwendung eines Patchs zu testen, wobei der Server enthält:
- erste Identifizierungseinrichtungen, die eingerichtet sind, eine Einheit von im ersten virtuellen Netzwerk enthaltenen abhängigen virtualisierten Netzwerkfunktionen zu identifizieren, wobei die Einheit mindestens die zu aktualisierende virtualisierte Netzwerkfunktion und mindestens eine Netzwerkfunktion enthält, die funktional von der zu aktualisierenden Netzwerkfunktion abhängt,
- Erzeugungseinrichtungen, die eingerichtet sind, ein zweites virtuelles Netzwerk (VN_{B}) zu erzeugen, "virtuelles Testnetzwerk" genannt, wobei das virtuelle Testnetzwerk Klone von virtuellen Maschinen enthält, die die abhängigen virtualisierten Netzwerkfunktionen der Einheit durchführen, wobei die geklonten virtuellen Maschinen Klone der abhängigen virtualisierten Netzwerkfunktionen der Einheit bilden, wobei die geklonten virtuellen Maschinen über einen Systemzustand verfügen, der gleich demjenigen der virtuellen Maschinen ist, die die abhängigen virtualisierten Netzwerkfunktionen der Einheit im ersten Netzwerk durchführen,
- Zusammenschaltungseinrichtungen, die eingerichtet sind, um im virtuellen Testnetzwerk Klone der abhängigen virtualisierten Netzwerkfunktionen der Einheit zusammenzuschalten, wobei die Zusammenschaltung der Klone der abhängigen virtualisierten Netzwerkfunktionen der Einheit gleich einer Zusammenschaltung der abhängigen virtualisierten Netzwerkfunktionen der Einheit im ersten Netzwerk ist,
- Identifizierungs-, Duplizierungs- und Weiterleitungseinrichtungen, die eingerichtet sind, mindestens ein Datenpaket am Eingang einer virtualisierten Netzwerkfunktion der Einheit von abhängigen virtualisierten Netzwerkfunktionen zu identifizieren, das identifizierte Paket zu duplizieren und das duplizierte Paket zum virtuellen Testnetzwerk weiterzuleiten,
- Anwendungseinrichtungen, die eingerichtet sind, den Patch auf den Klon der zu aktualisierenden virtualisierten Netzwerkfunktion im Testnetzwerk anzuwenden,
- Sammel- und Vergleichseinrichtungen, die eingerichtet sind, Werte mindestens eines ersten und eines zweiten Leistungsindikators zu sammeln und zu vergleichen, wobei ein erster Indikator einen Leistungswert auf einer virtualisierten Netzwerkfunktion der Einheit bei der Weiterleitung von Paketen am Eingang der virtualisierten Netzwerkfunktion im ersten virtuellen Netzwerk misst, und ein zweiter Indikator den Leistungswert auf dem Klon der entsprechenden virtualisierten Netzwerkfunktion bei der Weiterleitung duplizierter Pakete am Eingang der entsprechenden virtualisierten Funktion im virtuellen Testnetzwerk misst, wobei ein Alarm ausgelöst wird, wenn die Werte der ersten und zweiten Indikatoren sich unterscheiden.

7. Computerprogramm auf einem Datenträger und in den Speicher eines Computerservers ladbar, das Programmcodeanweisungen enthält, die dazu bestimmt sind, die Ausführung der Schritte des Anwendungsverfahrens eines Patchs auf eine virtualisierte Netzwerkfunktion, um die Aktualisierung der virtualisierten Netzwerkfunktion in einem virtuellen Netzwerk zu testen, nach einem der Ansprüche 1 bis 5 zu befehlen, wenn das Programm auf dem Server ausgeführt wird.

## Claims

1. Method for applying a patch to a virtualized network function (VNF_{A}) in order to test the updating of said virtualized network function that is included in a first virtual network (VN_{A}), a network hypervisor being interfaced between the first virtual network and a set of at least one hardware resource capable of supplying necessary resources to said first virtual network, said method, implemented by the network hypervisor, comprising:
- identifying (E1) a set of dependent virtualized network functions included in the first virtual network, said set comprising at least the virtualized network function to be updated and at least one network function functionally dependent on said network function to be updated,
- creating (E2) a second virtual network (VN_{B}) called a "virtual test network", said virtual test network comprising clones of virtual machines implementing the dependent virtualized network functions of the set, said cloned virtual machines forming clones of the dependent virtualized network functions of the set, the cloned virtual machines having a system state identical to that of the virtual machines implementing the dependent virtualized network functions of the set in the first network,
- interconnecting (E3), in the virtual test network, clones of the dependent virtualized network functions of the set, said interconnection being identical to an interconnection in the first network of the dependent virtualized network functions of the set,
- identifying (E4) at least one input data packet of a virtualized network function of the set of dependent virtualized network functions, duplicating said identified packet and routing said duplicated packet to the virtual test network,
- applying (E5) the patch to the clone of the virtualized network function to be updated in the test network,
- collecting and comparing (E6, E7) values of at least a first and a second performance indicator, a first indicator measuring a performance value on a virtualized network function of the set during the routing of input packets of said virtualized network function in the first virtual network and a second indicator measuring the performance value on the clone of the corresponding virtualized network function during the routing of duplicated input packets of the corresponding virtualized network function in the virtual test network, an alert being triggered when the values of the first and second indicators differ.

2. Method according to Claim 1, wherein, with a virtual infrastructure manager making an interface of the network hypervisor available to a client to which the first virtual network has been allocated, so that the client controls the first virtual network, said client thus exercising what is called indirect control over the first virtual network, the identification of an input packet of a virtualized network function of the set of dependent virtualized network functions, the duplication and the routing of said duplicated packet to the test network comprise, when the virtualized network function of the set of dependent virtualized network functions and the clone of the corresponding virtualized network function included in the second network are hosted by the same host server (h1):
installing a configuration rule on a network routing equipment of the host server, said network routing equipment being adapted to transmit the packet to the virtualized network function of the set of dependent virtualized network functions, said configuration rule comprising duplication of the input packet of the virtualized network function of the set of dependent virtualized network functions, and transmission of said duplicated packet to the clone of the corresponding virtualized network function contained in the second network and hosted by the host server.

3. Method according to Claim 1, wherein, with a virtual infrastructure manager making an interface of the network hypervisor available to a client to which the first virtual network has been allocated, so that the client controls the first virtual network, said client thus exercising what is called indirect control over the first virtual network, the identification of an input packet of a virtualized network function of the set of dependent virtualized network functions, the duplication and the routing of said duplicated packet to the corresponding virtualized network function in the test network comprise, when the virtualized network function of the set of dependent virtualized network functions is hosted by a first host server (h1) and the clone of the corresponding virtualized network function contained in the second network is hosted by a second host server (h2):
installing a first configuration rule on a first network routing equipment (s1) of the first host server, said first network routing equipment being adapted to transmit the packet to the virtualized network function of the set of dependent virtualized network functions, said configuration rule comprising duplication of the input packet of the virtualized network function of the set of dependent virtualized network functions, and transmission of said duplicated packet to the second server, a second configuration rule being installed on a second network routing equipment (s2) included in the second host server, the second configuration rule comprising the transmission of said packet to the clone of the corresponding virtualized network function included in the second network and hosted by the second host server.

4. Method according to Claim 1, wherein the network hypervisor receives from an operator of the first virtual network a rule intended to be installed in a network routing equipment, said rule modifying an identifier of the first virtual network, included in a packet intended to be routed to the virtual test network, into an identifier of the virtual test network, said rule being installed on the equipment by the hypervisor when the virtual test network is dedicated to the tests of virtualized network functions and when the first virtual network and the virtual test network belong to the same client.

5. Method according to one of the preceding claims, wherein, with a connection-oriented communication protocol being used to communicate with a dependent virtualized network function of the set, the step of identifying, duplicating and routing a packet to the test network comprises, in a connection establishment phase:
- receiving (E41) a synchronization packet, said packet having been received by the dependent virtualized network function, duplicated and being intended for routing to the corresponding virtualized network function in the test network, said packet comprising a connection identifier (Id_{cnx}), and routing said synchronization packet to the corresponding virtualized network function in the test network,
- receiving (E44) from the corresponding virtualized network function a first acknowledgement packet comprising a first sequence number (y2), and associating the first sequence number (y2) included in said acknowledgement packet with the connection identifier (Id_{cnx}), and routing said first acknowledgement packet,
- receiving (E46) a second acknowledgement packet, said second acknowledgement packet having been received previously by the dependent virtualized network function, duplicated and being intended for routing to the corresponding virtualized network function in the test network, said packet comprising the connection identifier (Id_{cnx}) and a first acknowledgement number (y1+1) calculated by incrementing a second sequence number generated and transmitted previously by the dependent virtualized network function, and replacing, in the second acknowledgement packet, said first acknowledgement number (y1+1) with a second acknowledgement number calculated by incrementing the first sequence number (y2+1), and routing said second acknowledgement packet to the corresponding virtualized network function in the test network.

6. Server (50) comprising a network hypervisor interfaced between a first virtual network and a set of at least one hardware resource capable of providing necessary resources to said first virtual network, said hypervisor being adapted to test the updating of a virtualized network function to be updated (VNF_{A}) that is included in the first virtual network (VN_{A}) by applying a patch, said server comprising:
- first identification means, arranged for identifying a set of dependent virtualized network functions included in the first virtual network, said set comprising at least the virtualized network function to be updated and at least one network function functionally dependent on said network function to be updated,
- creation means, arranged for creating a second virtual network (VN_{B}) called a "virtual test network", said virtual test network comprising clones of virtual machines implementing the dependent virtualized network functions of the set, said cloned virtual machines forming clones of the dependent virtualized network functions of the set, the cloned virtual machines having a system state identical to that of the virtual machines implementing the dependent virtualized network functions of the set in the first network,
- interconnection means, arranged for interconnecting, in the virtual test network, clones of the dependent virtualized network functions of the set, the interconnection of the clones of the dependent virtualized network functions of the set being identical to an interconnection in the first network of the dependent virtualized network functions of the set,
- identification, duplication and routing means, arranged for identifying at least one input data packet of a virtualized network function of the set of dependent virtualized network functions, duplicating said identified packet, and routing said duplicated packet to the virtual test network,
- application means, arranged for applying the patch to the clone of the virtualized network function to be updated in the test network,
- collection and comparison means, arranged for collecting and comparing values of at least a first and a second performance indicator, a first indicator measuring a performance value on a virtualized network function of the set during the routing of input packets of said virtualized network function in the first virtual network and a second indicator measuring the performance value on the clone of the corresponding virtualized network function during the routing of duplicated input packets of the corresponding virtualized function in the virtual test network, an alert being triggered when the values of the first and second indicators differ.

7. Computer program on a data medium which can be loaded into the memory of a computer server, the program comprising program code instructions for controlling the execution of the steps of the method for applying a patch to a virtualized network function in order to test the updating of said virtualized network function in a virtual network, according to one of Claims 1 to 5, when the program is executed on said server.
